# EUROPEAN PATENT APPLICATION

(11) **EP 2 642 379 A2**
(43) Date of publication of application: **25.09.2013**
(21) Application number: 13155595.5
(22) Date of filing: 18.02.2013
(51) Int. Cl.: G06F 3/06

(54) **Information processing apparatus, program, and data allocation method**

(30) Priority: 19.03.2012 JP 2012061747
(71) Applicant: FUJITSU LIMITED, Kawasaki-shi, Kanagawa 211-8588 (JP)
(72) Inventor: Ohno, Yoshinari, Kanagawa, 211-8588 (JP)
(74) Representative: HOFFMANN EITLE

(57) **Abstract**

In an information processing apparatus, a first selecting unit selects, as a source stripe, a stripe in which at least one of blocks stores a data item and another one of the blocks stores an error-correcting code for the data item, among a plurality of stripes each including a group of storage areas of a plurality of blocks that are located one on each of a plurality of storage devices. A second selecting unit selects, as a destination stripe, a stripe in which at least one of blocks stores a data item and in which the number of available blocks is equal to or greater than the number of blocks of the source stripe which store data items, among the stripes other than the source stripe. A moving unit moves the data item stored in the source stripe to the available block of the destination stripe.

## Description

### FIELD

The embodiments discussed herein are related to an information processing apparatus, a program, and a data allocation method.

### BACKGROUND

A redundant array of inexpensive disks (RAID) is a technology that uses multiple hard disks so as to create a large storage area while providing fault tolerance. Some of the RAID levels are implemented by partitioning a disk storage area into stripes, and protecting data using parity.

In these RAID levels, the storage space of multiple hard disks includes a plurality of stripes such that data are divided and written to the stripes (striping). Upon writing data, a parity calculation is performed, and the obtained calculation results are stored.

With these RAID levels, data may be read in parallel from multiple hard disks at the same time, which improves the reading speed.

Further, even if one of the hard disks fails, the lost data can be calculated using the remaining data and the parity for data recovery. This makes it possible to reconstruct the original data.

As one RAID technique, there has been disclosed a technique that moves data stored in a stripe to another stripe, and reconfigures the stripes so as to expand the storage area (see, for example, Japanese Laid-open Patent Publication No. 8-115173). There has also been disclosed a technique that, when a disk drive is added, reads data stored in an existing disk drive and distributes the read data to the existing drive and the added drive (see, for example, Japanese Laid-open Patent Publication No. 2009-230352).

However, with the above-described RAID techniques, a write penalty is incurred when new data are written to an available area of a stripe in which data and parity are already written.

The write penalty is overhead that is incurred due to parity processing upon data writing. The write penalty delays the data writing operation. If the write penalty is frequently incurred, the delay in the data writing operation is increased, which may result in a reduction in the system operation efficiency.

### SUMMARY

Accordingly, the present invention is directed to provide an information processing apparatus, a program, and a data allocation method that prevent a write penalty from being incurred.

According to one aspect of the invention, there is provided an information processing apparatus that includes first selecting means for selecting, as a source stripe, a stripe in which at least one of blocks stores a data item and another one of the blocks stores an error-correcting code for the data item, among a plurality of stripes each including a group of storage areas of a plurality of blocks that are located one on each of a plurality of storage devices; second selecting means for selecting, as a destination stripe, a stripe in which at least one of blocks stores a data item and in which the number of available blocks is equal to or greater than the number of blocks of the source stripe which store data items, among the stripes other than the source stripe; and moving means for moving the data item stored in the source stripe to the available block of the destination stripe.

### BRIEF DESCRIPTION OF DRAWINGS

FIG. 1 illustrates an exemplary configuration of an information processing apparatus;
FIG. 2 illustrates exemplary operations for selecting and moving data;
FIG. 3 illustrates exemplary operations for selecting and moving data;
FIG. 4 is an example illustrating how a write penalty is incurred;
FIG. 5 illustrates a data writing operation in which a write penalty is avoided;
FIG. 6 illustrates an exemplary configuration of a file management system;
FIG. 7 illustrates an exemplary functional configuration of a file server;
FIG. 8 illustrates an exemplary hardware configuration of a file server;
FIG. 9 illustrates an exemplary configuration of file management;
FIG. 10 illustrates an exemplary configuration of a data number management table;
FIG. 11 illustrates an exemplary configuration of a data presence management table;
FIG. 12 illustrates how data are stored;
FIG. 13 illustrates a change made to the stored data;
FIG. 14 illustrates stripes after addition of a hard disk;
FIG. 15 illustrates how data are reallocated;
FIG. 16 illustrates how data are reallocated;
FIG. 17 is a flowchart illustrating data allocation control;
FIG. 18 is a flowchart illustrating data allocation control;
FIG. 19 illustrates a detailed flow of a source stripe search operation;
FIG. 20 illustrates a detailed flow of a destination stripe search operation; and
FIG. 21 illustrates a detailed flow of a data moving operation.

### DESCRIPTION OF EMBODIMENTS

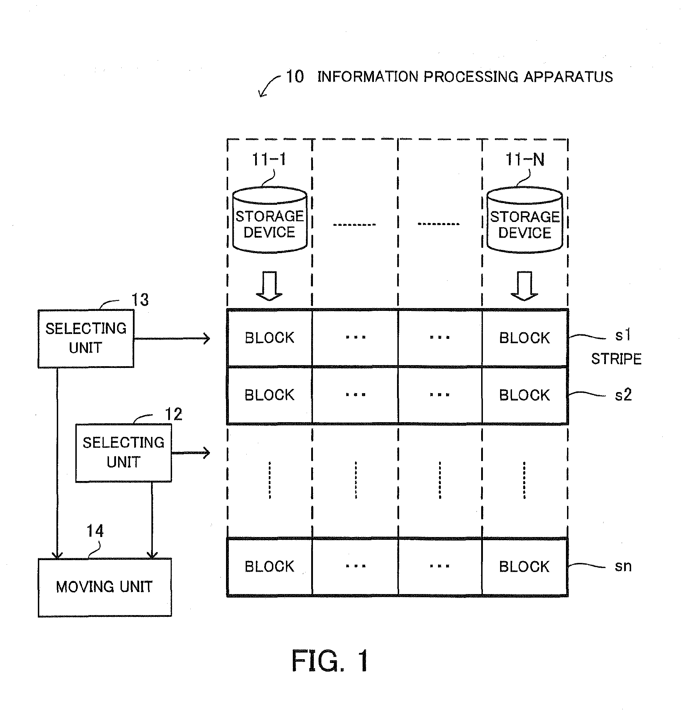

Several embodiments will be described below with reference to the accompanying drawings, wherein like reference numerals refer to like elements throughout.FIG. 1 illustrates an exemplary configuration of an information processing apparatus 10. The information processing apparatus 10 includes storage devices 11-1 through 11-N, a selecting unit 12, a selecting unit 13, and a moving unit 14.

Stripes s1 through sn are formed across the storage devices 11-1 through 11-N. Each of the stripes s1 through sn includes a group of storage areas of a plurality of blocks that are located one on each of the storage devices 11-1 through 11-N. The blocks of the stripes s1 through sn are configured to store data items and error-correcting codes (hereinafter parity) for the data items.

The selecting unit 12 selects, as a source stripe, a stripe in which at least one of the blocks stores a data item and another one of the blocks stores an error-correcting code for the data item, among the plurality of stripes s1 through sn each including a group of storage areas of a plurality of blocks that are located one on each of the storage devices 11-1 through 11-N.

The selecting unit 13 selects, as a destination stripe, a stripe in which at least one of the blocks stores a data item and in which the number of available blocks is equal to or greater than the number of blocks of the source stripe which store data items, among the stripes other than the source stripe.

The moving unit 14 moves the data item stored in the source stripe to the available block of the destination stripe.

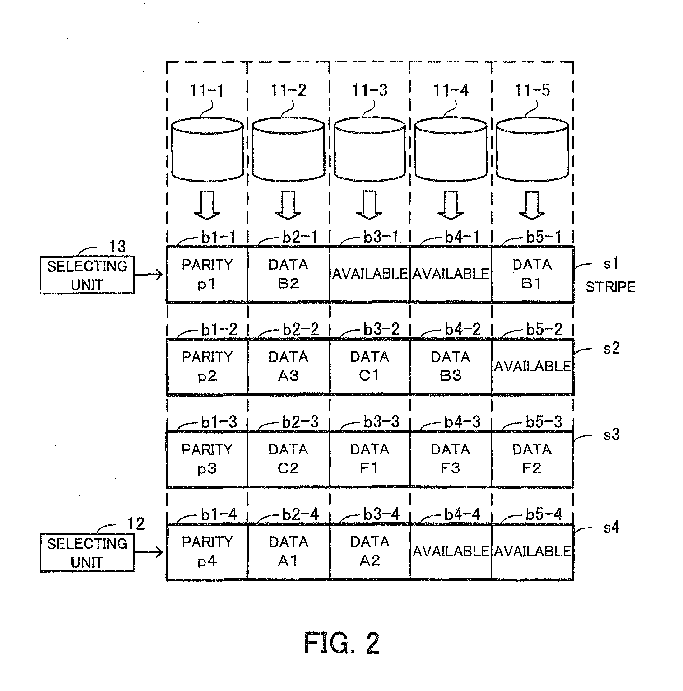

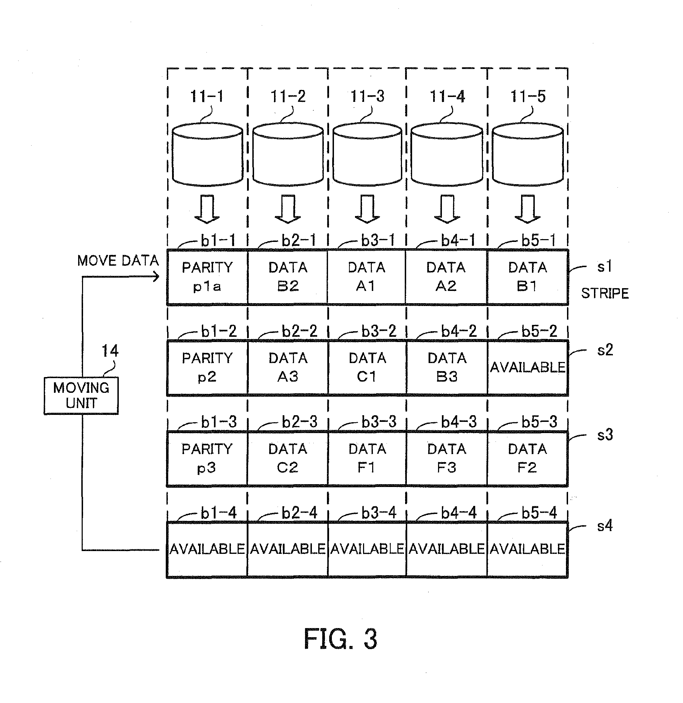

FIG. 2 illustrates exemplary operations for selecting and moving data. FIG. 2 illustrates a state before data movement, and FIG. 3 illustrates a state after data movement. In this example, storage devices 11-1 through 11-5 are provided. The storage area of the storage device 11-1 is divided into blocks b1-1 through b1-4.

Similarly, the storage area of the storage device 11-2 is divided into blocks b2-1 through b2-4, and the storage area of the storage device 11-3 is divided into blocks b3-1 through b3-4. Also, the storage area of the storage device 11-4 is divided into blocks b4-1 through b4-4, and the storage area of the storage device 11-5 is divided into blocks b5-1 through b5-4.

Meanwhile, the storage space of the storage devices 11-1 through 11-5 includes the stripes s1 through s4. Each of the stripes s1 through s4 extends across the storage devices 11-1 through 11-5, and includes blocks located one on each of the storage devices 11-1 through 11-5.

More specifically, the stripe s1 includes the blocks b1-1, b2-1, b3-1, b4-1, and b5-1. The stripe s2 includes the blocks b1-2, b2-2, b3-2, b4-2, and b5-2.

Similarly, the stripe s3 includes the blocks b1-3, b2-3, b3-3, b4-3, and b5-3, and the stripe s4 includes the blocks b1-4, b2-4, b3-4, b4-4, and b5-4.

In FIG. 2, data and parity are stored in the stripes s1 through s4 in the following manner. In the stripe s1, the block b2-1 stores a data item B2; the block b5-1 stores a data item B1; and the blocks b3-1 and b4-1 are available. Also, the block b1-1 stores a parity p1 calculated from the data items B2 and B1.

In the stripe s2, the block b2-2 stores a data item A3; the block b3-2 stores a data item C1; the block b4-2 stores a data item B3; and the block b5-2 is available. Also, the block b1-2 stores a parity p2 calculated from the data items A3, C1 and B3.

In the stripe s3, the block b2-3 stores a data item C2; the block b3-3 stores a data item F1; the block b4-3 stores a data item F3; and the block b5-3 stores a data item F2. Also, the block b1-3 stores a parity p3 calculated from the data items C2, F1 F3, and F2.

In the stripe s4, the block b2-4 stores a data item A1; the block b3-4 stores a data item A2; and the blocks b4-4 and b5-4 are available. Also, the block b1-4 stores a parity p4 calculated from the data items A1 and A2.

As described above, data of one information unit are distributed and stored in a plurality of stripes (for example, the data items A1 through A3 forming one information unit are distributed and stored in the stripes s2 and s4).

In the above example, the parities that are calculated on a per-stipe basis are all stored in the storage device 11-1. However, the parities may be distributed across the storage devices 11-1 through 11-4.

Next, a data selecting operation will be described. In FIG. 2, the selecting unit 12 selects, as a source stripe, a stripe in which at least one of the blocks stores a data item and another one of the blocks stores an error-correcting code for the data item, among the stripes s1 through s4. In this example, the stripe s4 is selected.

The selecting unit 13 selects, as a destination stripe, a stripe in which at least one of the blocks stores a data item and in which the number of available blocks is equal to or greater than the number of blocks of the source stripe which store data items, among the stripes s1 through s3 other than the source stripe s4.

In this example, since the number of blocks storing data items in the source stripe s4 selected by the selecting unit 12 is two, a stripe having two or more available blocks is selected.

In this example, the stripe s1 satisfies this condition (the stripe s2 has only one available block, and the stripe s3 has no available block). Accordingly, the selecting unit 13 selects the stripe s1 as the data destination stripe.

Next, a description will be given of the processing from data movement to generation of a stripe storing no data item. In FIG. 3, the moving unit 14 moves the data items A1 and A2 stored in the source stripe s4 to available blocks of the destination stripe s1.

In FIG. 3, the data item A1 stored in the block b2-4 of the stripe s4 is moved to the available block b3-1 of the stripe s1. Also, the data item A2 stored in the block b3-4 of the stripe s4 is moved to the available block b4-1 of the stripe s1.

In the stripe s1 after the data movement, since the stored data are changed, parity is calculated again. A parity p1a obtained as a new parity calculation result is stored in the block b1-1.

On the other hand, in the stripe s4, since all the stored data items A1 and A2 are moved to the stripe s1, the parity p4 is removed. As a result, all the blocks b1-4, b2-4, b3-4, b4-4, and b5-4 become available. That is, the stripe s4 stores no data item.

Next, a description will be given of how a write penalty is incurred and how a write penalty is avoided by the above-described control performed by the information processing apparatus 10.

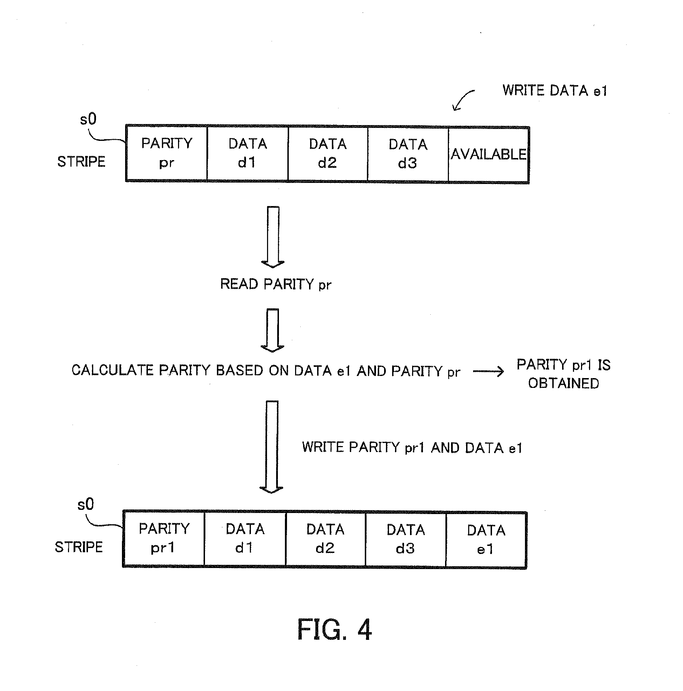

FIG. 4 is an example illustrating how a write penalty is incurred. If new data are written to an available area of a stripe in which data and parity are already written, a write penalty is incurred.

In the illustrated example, there is a stripe s0 including five blocks, and data items d1 through d3 and a parity pr calculated from the data items d1 through d3 are already written in the stripe s0. In this example, it is assumed that a data item e1 is written to an available block in the stripe s0.

In this case, the parity pr is first read. Then, a new parity pr1 is calculated using the parity pr and the write data item e1. After that, the data e1 and the new parity pr1 are written to the stripe s0.

In this manner, in the case of writing the data item e1 to an available block of the stripe s0, the parity pr having been written in the stripe s0 needs to be read in order to calculate a new parity.

Then, parity calculation is performed using the parity pr and the write data item e1. After that, the data e1 and the new parity pr1 are written.

These operations are referred to as a write penalty. The write penalty includes overhead for reading the already stored parity upon calculation of parity, so that the speed of the data writing operation is reduced.

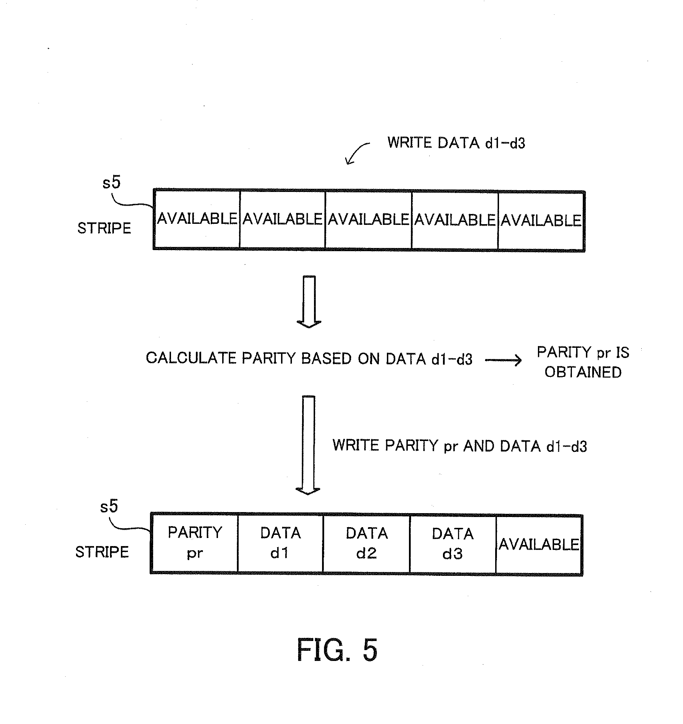

FIG. 5 illustrates a data writing operation in which a write penalty is avoided. The information processing apparatus 10 generates a stripe storing no data item by performing the above-described data selecting and moving operations of FIGS. 1 through 3. Then, when data writing is requested, data are written to the stripe storing no data item (if no data item is stored, no parity is stored).

For example, as illustrated in FIG. 5, it is assumed data items d1 through d3 are written to a stripe s5 in which no data item is stored. In this case, parity calculation is performed using the data items d1 through d3. Then, the data items d1 through d3 and a parity pr obtained as a parity calculation result are written to available blocks of the stripe s5.

In this way, in the case of writing data to a stripe storing no data, there is no overhead for reading the already-written data and parity, and therefore it is possible to prevent the speed of the data writing operation from being reduced. That is, it is possible to avoid a write penalty.

As described above, the information processing apparatus 10 performs data allocation control such that, in a plurality of stripes each including a group of storage areas of a plurality of blocks that are located one on each of the storage devices 11-1 through 11-N, data in one of the stripes are moved to another one of the stripes having an available storage area.

Thus, a stripe storing no data is generated. Writing data to this stripe makes it possible to avoid a write penalty and therefore to prevent the data writing operation from being delayed.

The following describes an embodiment in detail as an example of application of the information processing apparatus 10. In this embodiment, the information processing apparatus 10 is applied to a file server.

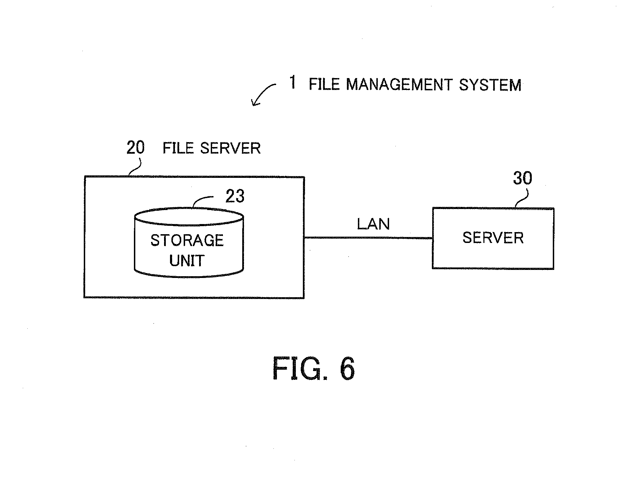

FIG. 6 illustrates an exemplary configuration of a file management system 1. The file management system 1 includes a file server 20 and a server 30. The file server 20 and the server 30 are connected to each other via a local area network (LAN).

The file server 20 includes a storage unit 23. In the storage unit 23, a RAID is formed in the storage unit 23. The file server 20 centrally performs RAID control and file system management. Further, the file server 20 provides data stored in the storage unit 23 in the form of a file to the server 30 via the LAN.

Before discussing the configuration and operation of the file server 20, problems with a conventional file server will be described. In a conventional file server, while performing file system control, the available storage space may run out due to an increase in the number of stored files over time.

For such a case, the file server has a function of increasing the available space by adding a hard disk for storing data.

In the case where a hard disk is added when the existing hard disk does not have sufficient available space, the existing hard disk has only a small area for storing additional data. Therefore, most of the new write data are stored in the added hard disk.

Thus, in the conventional file server, accesses for data writing may be concentrated in a particular one of the hard disks of the RAID, which results in a delay in the data writing operation.

Further, when accesses for data writing are concentrated in a particular hard disk, another problem may arise. In general, since the recently created data are often referred to, accesses may be concentrated in the newly-added hard disk when reading the recently created data.

For reading data at the highest speed, data may be read uniformly read from all the hard disks included in the RAID. However, if disk accesses are concentrated, it is not possible to read data at high speed.

For example, the time taken to read data by accessing only one hard disk is at most three times the time taken to read data by uniformly accessing three hard disks storing the data.

The technique disclosed herein has been made in view of these problems, and aims to prevent concentration of access to a particular hard disk and thus to prevent a delay in data writing and reading operations.

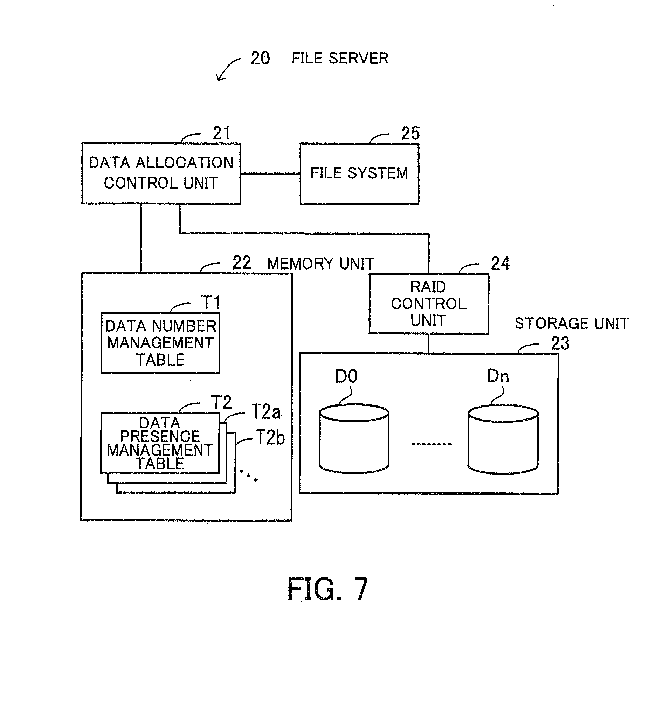

Next, a description will be given of the configuration of the file server 20. FIG. 7 illustrates an exemplary functional configuration of the file server 20. The file server 20 includes a data allocation control unit 21, a memory unit 22, a storage unit 23, a RAID control unit 24, and a file system 25.

The data allocation control unit 21 serves as the selecting units 12 and 13 and the moving unit 14 of FIG. 1, and performs data allocation control. The memory unit 22 stores a data number management table T1 (described below) and data presence management tables T2, T2a, T2b, and so on (described below) which are provided for the respective hard disks.

The storage unit 23 includes hard disks D0 through Dn (corresponding to the storage devices 11-1 through 11-N of FIG. 1), and performs RAID control on the hard disks D0 through Dn. The file system 25 performs file management control.

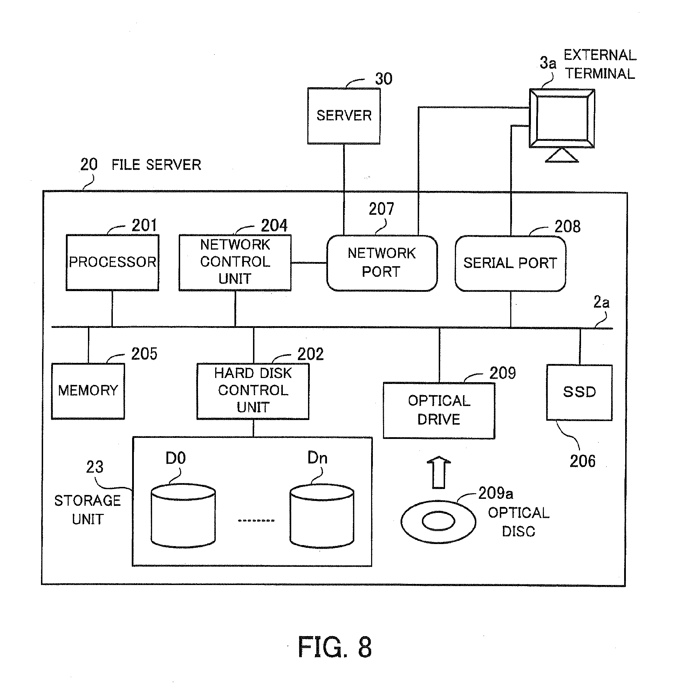

FIG. 8 illustrates an exemplary hardware configuration of the file server 20. The file server 20 includes a processor 201, a hard disk control unit 202, a storage unit 23, a network control unit 204, a memory 205, a solid state drive (SSD) 206, a network port 207, a serial port 208, and an optical drive 209.

The processor 201, the hard disk control unit 202, the network control unit 204, the memory 205, the SSD 206, the serial port 208, and the optical drive 209 are connected to each other via an internal bus 2a.

The processor 201 is a central processing unit (CPU), and executes various programs so as to perform data allocation control and file system control. It is to be noted that the processor 201 realizes the data allocation control unit 21 and the file system 25 of FIG. 7.

The network control unit 204 is a chip dedicated to network control, for example, and controls the interface with an external network via the network port 207.

The hard disk control unit 202 may be a serial attached small computer system interface (SAS) controller, for example, and realizes the RAID control unit 24 of FIG. 7.

The hard disk control unit 202 controls writing data to and reading data from the hard disks D0 through Dn of the storage unit 23 in accordance with an instruction from the processor 201.

The memory 205 may be a random access memory (RAM), for example, and realizes the memory unit 22 of FIG. 7. The SSD 206 includes a control procedure storage area so as to store various programs storing the operational procedure of the file server 20.

For example, programs for RAID control, file system control, and data allocation control are stored in the control procedure storage area. These programs are read by the processor 201, and loaded and expanded on the memory 205 so as to be executed.

The network port 207 is connected to an external terminal 3a via a LAN cable, while the serial port 208 is connected to the external terminal 3a via a serial cable. The network port 207 and the serial port 208 serve as interface ports for communicating with external devices. It is to be noted that the server 30 of FIG. 6 is also connected to the network port 207 via a LAN cable. The optical drive 209 reads data from an optical disc 209a with use of laser beams or the like.

The processing functions of this embodiment may be realized with the hardware configuration described above. For causing a computer to execute the processing functions described in this embodiment, a program is provided that includes instructions describing the functions of the file server 20.

A computer executes the program so as to provide the processing functions described above. The program may be stored in a computer-readable recording medium. Examples of computer-readable recording media include magnetic storage devices, optical discs, magneto-optical storage media, and semiconductor memory devices. Examples of magnetic storage devices include hard disk drives (HDDs), flexible disks (FDs), and magnetic tapes. Examples of optical discs include DVDs, DVD-RAMs, CD-ROMs, and CD-RWs. Examples of magneto-optical storage media include magneto-optical disks (MOs). It is to be noted that the computer-readable recording medium storing the program does not include transitory propagating signals per se.

The program may be distributed on portable storage media such as DVD and CD-ROM. Network-based distribution of the program may also be possible. In this case, the program may be stored in a storage device of a server computer so as to be downloaded from the server computer to other computers via a network.

For executing the program, a computer loads the program, which may be recorded on a portable storage medium or downloaded from a server computer, to its local storage device. Then, the computer reads the program from its storage device, thereby performing operations in accordance with the program. Alternatively, the computer may read the program directly from a portable storage medium so as to perform operations in accordance with the program. Further alternatively, the computer may sequentially perform processing in accordance with a program every time a program is downloaded from the server computer.

The processing functions described above may also be implemented wholly or partly by using electronic circuits such as digital signal processor (DSP), application-specific integrated circuit (ASIC), and programmable logic device (PLD).

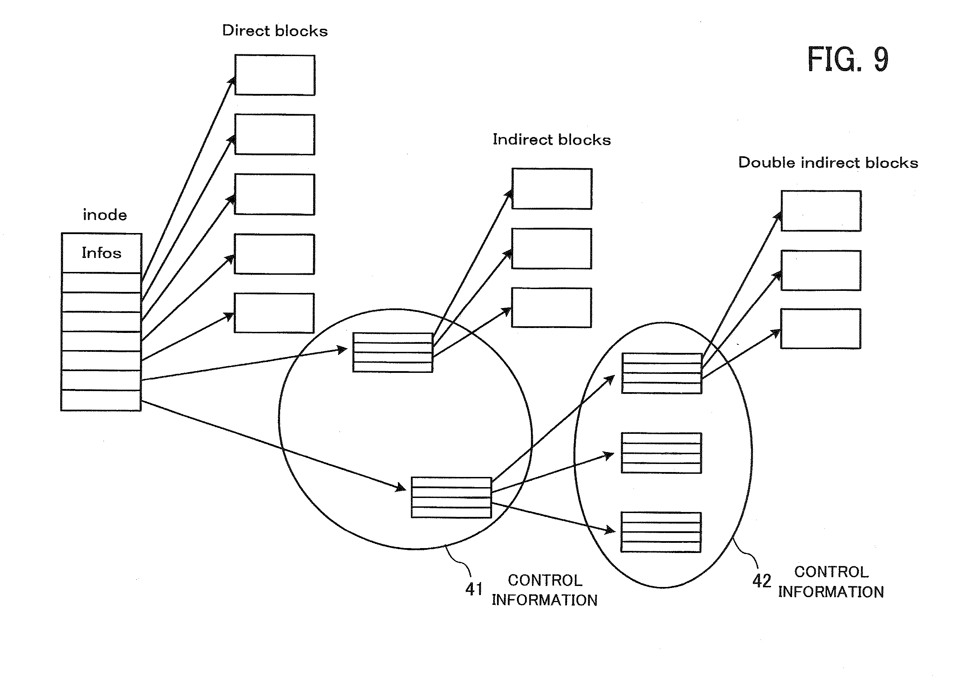

Next, a description will be given of how file management is performed in the file server 20. FIG. 9 illustrates an exemplary configuration of file management.

As a way of managing data in storage media such as hard disks, a method using a file system is known. The file system generally includes an area for managing and controlling data and an area for storing the data.

The former is often referred to as an inode. The latter includes direct blocks, indirect blocks, and double indirect blocks illustrated in FIG. 9 (which are collectively referred to as data blocks).

At least one inode is assigned to a set of data so as to manage the data. The metadata (attribute information) of the file and the actual location where the data are stored are recognized by referring to the inode.

For example, in the inode, a pair of hard disk number and a stripe number (or a block number corresponding to the stripe in the hard disk) indicates the location of a block storing data. It is to be noted that, since the data are often displayed in the form of a list, the inode information is present in the cache in many cases.

If data are reallocated, the locations of the data blocks are changed. In this case, positional information of the data blocks stored in the inodes is updated. In the case of the indirect blocks and the double indirect blocks, although the inode itself is not changed, control information items 41 and 42 (each enclosed by a circle in FIG. 9) indicating these data blocks are updated.

The control information items 41 and 42 store identifiers of hard disks and positional information in the hard disks. A cache where inode and control information items 41 and 42 are stored is referred to as inode cache.

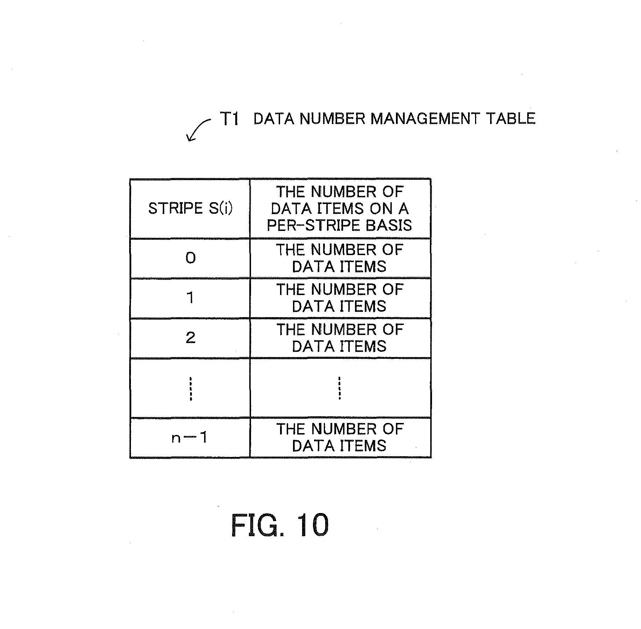

Next, a description will be given of the data number management table T1 and the data presence management table T2. FIG. 10 illustrates an exemplary configuration of the data number management table T1. In the data number management table T1, information on "stripe S(i)" and "the number of data items on a per-stripe basis" is registered.

The information in "stripe S(i)" is identification information (stripe number) of a stripe. Generally, the stripe numbers are sequentially assigned to stripes in block address order.

The information in "the number of data items on a per-stripe stripe basis" indicates the number of data items stored in a stripe. The maximum number of data items is equal to the number of hard disks included in the RAID.

It is to be noted that one data number management table T1 is provided for each RAID. Further, a table expression "S(x)=y" indicates that the stripe of the number x stores y effective data items.

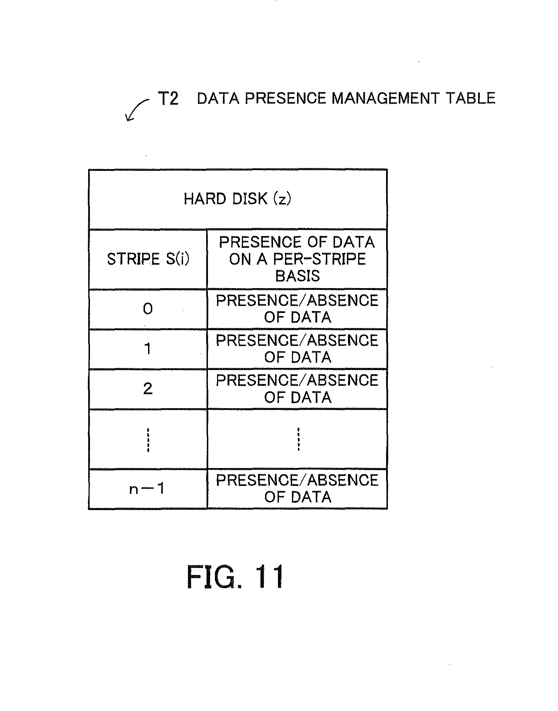

FIG. 11 illustrates an exemplary configuration of the data presence management table T2. In the data presence management table T2, information on "stripe S(i)" and "presence of data on a per-stripe basis" is registered for each hard disk (z) (i.e., for each hard disk of the number z).

The information in "stripe S(i)" is identification information (stripe number) of a stripe. The information in "presence of data on a per-stripe basis" indicates whether data are present on a per-stripe basis in each hard disk. When data are present, "1" is registered; and when data are not present, "0" is registered.

It is to be noted that one data presence management table T2 is provided for each of the hard disks of the RAID. Further, a table expression "D_{z}(x)" indicates a stripe of the number x on the hard disk of the number z.

That is, for example, D₂(3)=1 indicates that the stripe of the number 3 on the hard disk of the number 2 stores effective data. On the other hand, D₂(3)=0 indicates that the stripe of the number 3 on the hard disk of the number 2 does not any effective data.

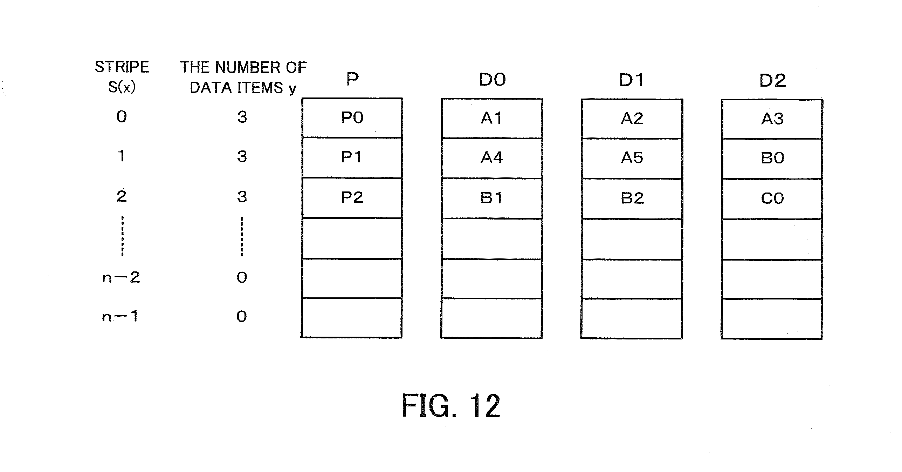

Next, data allocation control will be described with specific examples, with reference to FIGS. 12 through 16. In the following description, writing data to a stripe in which all the blocks are available is referred to as "stripe write". Further, the area of such a stripe is referred to as a "stripe-write acceptable area".

FIG. 12 illustrates the state of stored data. In FIG. 12, the initial state of stored data is illustrated. Hard disks P and D0 through D2 are provided. For simplicity, it is assumed that the hard disk P stores parity, and the hard disks D0 through D2 store data. Further, stripes S(0) through S(n-1) are formed across the hard disk P and the hard disks D0 through D2.

The following describes the state of the data and parity stored in each stripe. In the stripe S(0), a block of the hard disk D0 stores a data item A1; a block of the hard disk D1 stores a data item A2; and a block of the hard disk D2 stores a data item A3. Accordingly, S(0)=3. Also, a block of the hard disk P stores a parity P0 calculated from the data items A1 through A3.

In the stripe S(1), a block of the hard disk D0 stores a data item A4; a block of the hard disk D1 stores a data item A5; and a block of the hard disk D2 stores a data item B0. Accordingly, S(1)=3. Also, a block of the hard disk P stores a parity P1 calculated from the data items A4, A5, and B0.

In the stripe S(2), a block of the hard disk D0 stores a data item B1; a block of the hard disk D1 stores a data item B2; and a block of the hard disk D2 stores a data item C0. Accordingly, S(2)=3. Also, a block of the hard disk P stores a parity P2 calculated from the data items B1, B2, and C0.

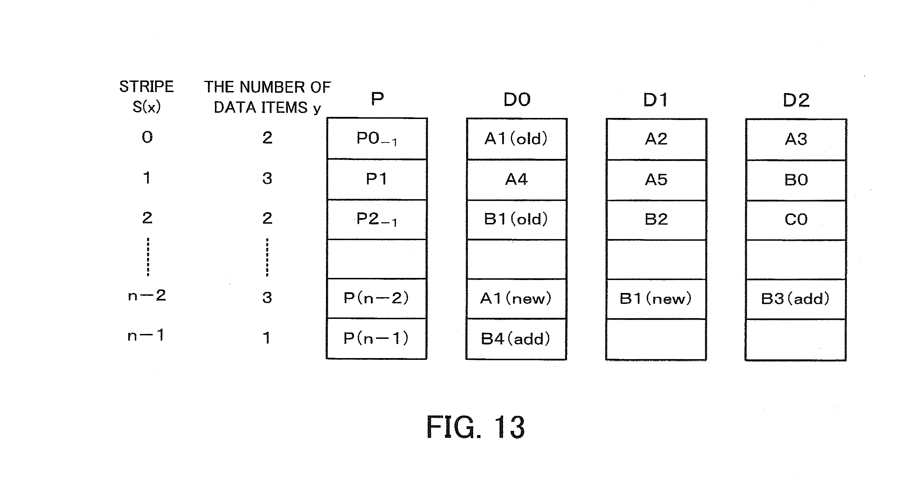

FIG. 13 illustrates a change made to the stored data. The state of FIG. 12 is transformed into a fragmented state after a while. In FIG. 13, the data items A1 and B1 are rewritten, and data items B3 and B4 are newly added.

In FIG. 13 and subsequent drawings, an old data item replaced with a new data item is indicated with "old"; a new data item with which an old data item is replaced is indicated with "new"; and an added data item is indicated with "add". It is to be noted that the block storing an old data item indicated with "old" is actually an available block.

The following describes the state of the data and parity stored in each stripe. In the stripe S(0), the block of the hard disk D1 stores the data item A2; and the block of the hard disk D2 stores the data item A3. Accordingly, S(0)=2. Also, the block of the hard disk P stores a parity P0₋₁, which is newly calculated from the data items A2 and A3.

There is no change in the stored state of the stripe S(1). In the stripe S(2), the block of the hard disk D1 stores the data item B2; and the block of the hard disk D2 stores the data item C0. Accordingly, S(2)=2. Also, the block of the hard disk P stores a parity P2₋₁, which is newly calculated from the data items B2 and C0.

In a stripe S(n-2), a block of the hard disk D0 stores a data item A1 (new); a block of the hard disk D1 stores a data item B1 (new); and a block of the hard disk D2 stores a data item B3 (add). Accordingly, S(n-2)=3. Also, a block of the hard disk P stores a parity P(n-2), which is calculated from the data items A1 (new), B1 (new), and B3 (add).

In a stripe S(n-1), a block of the hard disk D0 stores a data item B4 (add). Accordingly, S(n-1)=1. Also, a block of the hard disk P stores a parity P(n-1), which is calculated from the data item B4 (add).

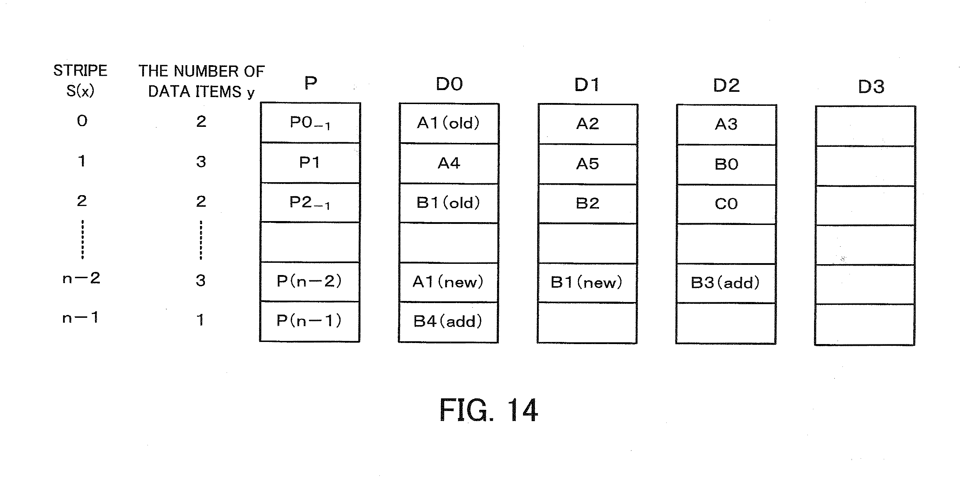

Next, a new hard disk D3 is added to the hard disks of FIG. 13. FIG. 14 illustrates stripes after addition of the hard disk D3. When the unused hard disk D3 is added, the data allocation control unit 21 adds a block of the hard disk D3 to each of the existing stripes.

That is, although there are four blocks in each of the stripes S(0) through S(n-1) before the hard disk D3 is added, there are five blocks in each of the stripes S(0) through S(n-1) after the hard disk D3 is added.

Next, a description will be given of an operation of selecting a source stripe after addition of a hard disk. The data allocation control unit 21 starts an operation of selecting a source stripe when a block is added to each of the existing stripes.

The data allocation control unit 21 preferentially selects, as a source stripe, a stripe having a small number of blocks that store data items, among the stripes storing data items (excluding stripes storing no data item).

In the example of FIG. 14, the stripe S(n-1) has the smallest number of blocks that store data items. The stripes S(0) and S(2) have the second smallest number of blocks that store data items. The stripes S(1) and S(n-2) have the largest number of blocks that store data items. Accordingly, the data allocation control unit 21 selects the stripe S(n-1) as the source stripe.

Next, a description will be given of an operation of selecting a destination stripe. When selecting a destination stripe, the data allocation control unit 21 preferentially selects a stripe which is to have a small number of available blocks after data movement.

In this example, the source stripe S(n-1) stores one data item, and there are four hard disks (blocks) for storing data items.

Accordingly, if a stripe storing 3 (=4-1) data items is currently present among the stripes, the data item may be moved from the source stripe to this stripe. Then, the number of available blocks in this stripe becomes 0. That is, in this case, the stripe having three data items is the stripe which is to have the smallest number of available blocks after data movement.

Currently, there are two stripes, namely, the stripes S(1) and S(n-2), which store three data items. If a plurality of candidate destination stripes of the same conditions are present, a stripe of the lowest stripe number may be selected. In this case, the strip S(1) is selected.

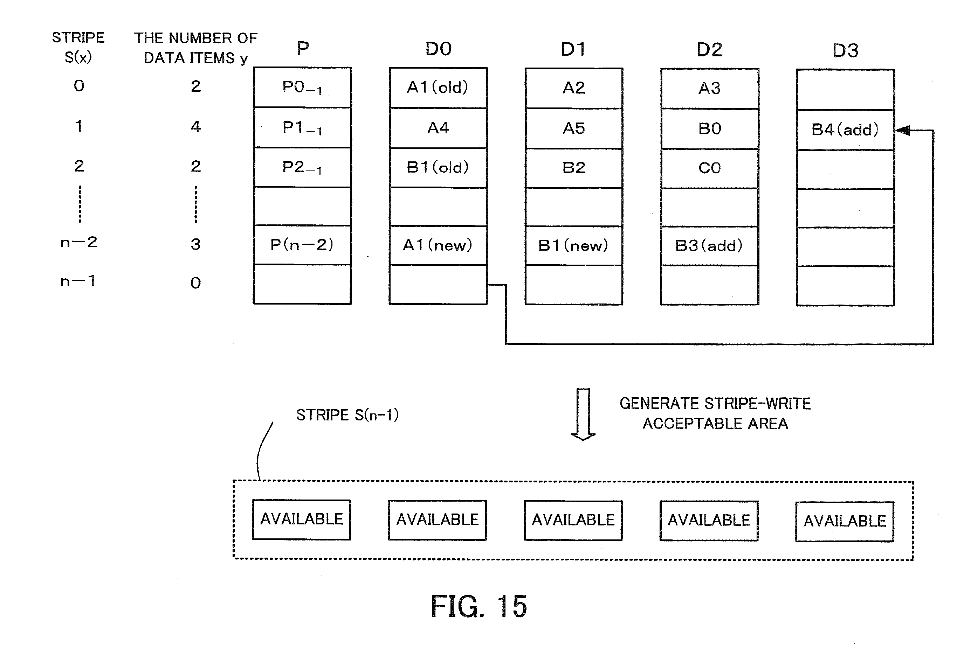

FIG. 15 illustrates how data are reallocated. The data allocation control unit 21 selects the stripe S(1) as the destination stripe. After that, the data allocation control unit 21 moves the data item B4 (add) from the hard disk D1 in the source stripe S(n-1) to the hard disk D3 in the destination stripe S(1). At this point, parity is recalculated, so that new parity (parity P1₋₁) is stored in the hard disk P in the stripe S(1).

As a result of the above-described data reallocation, none of the blocks of the stripe S(n-1) stores a data item, so that the stripe S(n-1) becomes a stripe-write acceptable area.

Then, similar control operations are repeated. The next data reallocation operation is as follows. First, the data allocation control unit 21 preferentially selects, as a source stripe, a stripe having a small number of blocks that store data items, among the stripes storing data items (excluding stripes storing no data item).

In the example of FIG. 15, the stripes S(0) and S(2) have the smallest number of blocks that store data items. If a plurality of candidate source stripes of the same conditions are present, a stripe of the highest stripe number may be selected. In this case, the strip S(2) is selected. Accordingly, the data allocation control unit 21 selects the stripe S(2) as the source stripe.

Next, the data allocation control unit 21 selects a destination stripe. The data allocation control unit 21 preferentially selects a stripe which is to have a small number of available blocks after data movement. In this example, the source stripe S(2) stores two data items, and there are four hard disks (blocks) for storing data items.

Accordingly, if a stripe storing 2 (=4-2) data items is currently present among the stripes, the data items may be moved from the source stripe to this stripe. Then, the number of available blocks in this stripe becomes 0. That is, in this case, the stripe having two data items is the stripe which is to have the smallest number of available blocks after data movement.

Currently, the stripe storing two data items is the stripe S(0), other than the source stripe S(2). Accordingly, the data allocation control unit 21 selects the stripe S(0) as the destination stripe.

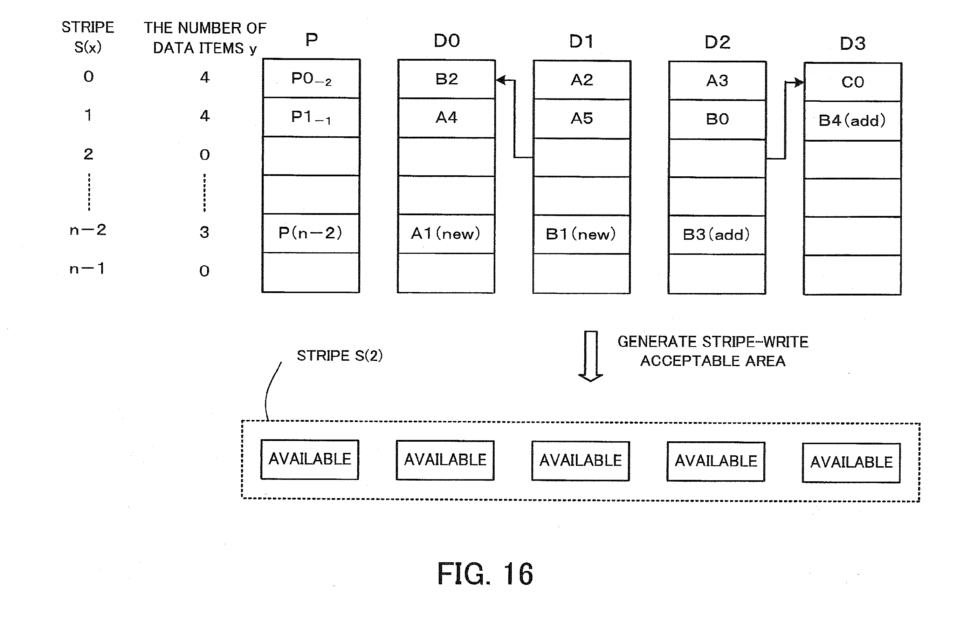

FIG. 16 illustrates how data are reallocated. The data allocation control unit 21 moves the data item B2 from the hard disk D1 in the source stripe S(2) to the hard disk D0 in the destination stripe S(0).

Further, the data allocation control unit 21 moves the data item C0 from the hard disk D2 in the source stripe S(2) to the hard disk D3 in the destination stripe S(0). At this point, parity is recalculated, so that new parity (parity P0₋₂) is stored in the hard disk P in the stripe S(0).

As a result of the above-described data reallocation, none of the blocks of the stripe S(2) stores a data item, so that the stripe S(2) becomes a stripe-write acceptable area. It is to be understood that although data allocation control in the case where a hard disk is added is described above, data allocation control may be performed using this procedure even in the case where a hard disk is not added.

As described above, by selecting and moving data to be stored in a stripe, a stripe-write acceptable area is efficiently generated with fewer data allocation operations. Therefore, a write penalty may be avoided.

Further, with the data allocation control described above, even in the case where a hard disk is added, it is possible to prevent concentration of access to a particular hard disk and thus to prevent a delay in data writing and reading operations.

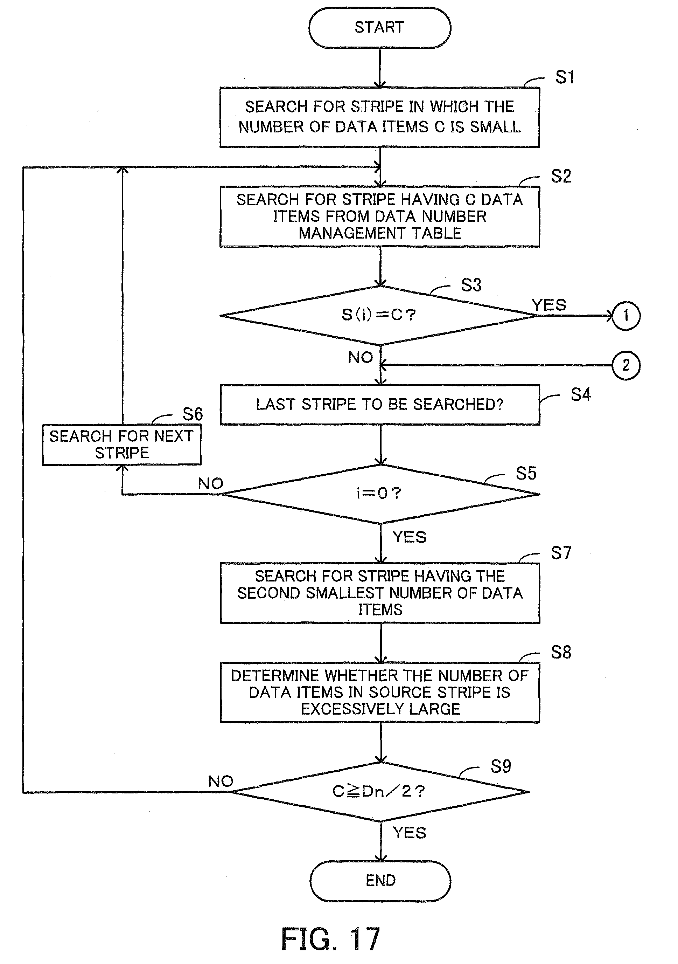

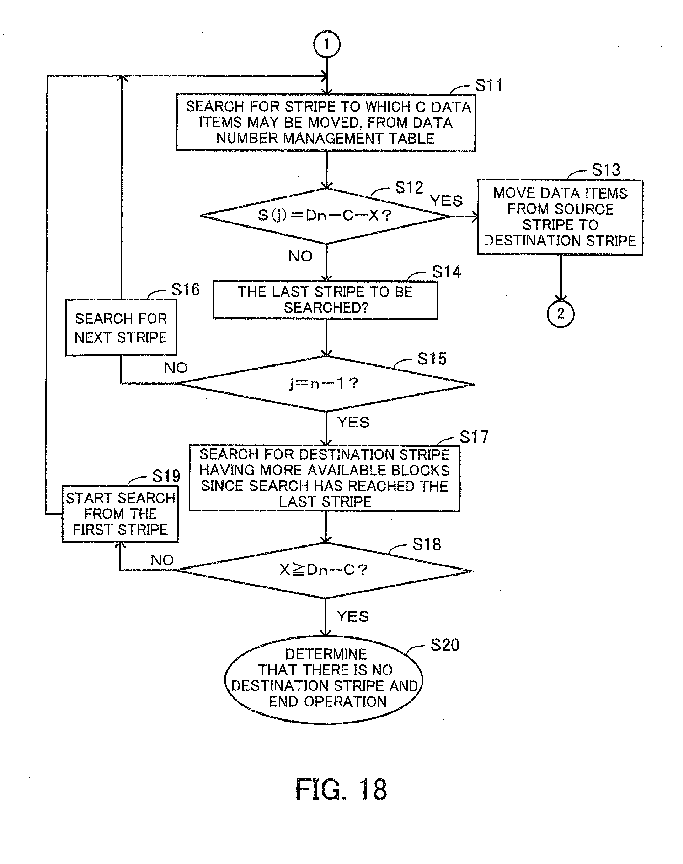

Next, data allocation control will be described with reference to flowcharts. FIGS. 17 and 18 are flowcharts illustrating data allocation control. More specifically, FIG. 17 illustrates the flow of a source stripe search operation, and FIG. 18 illustrates the flow of a destination stripe search operation.

(S1) The data allocation control unit 21 searches for a stripe in which the number of data items C is small. First, the data allocation control unit 21 searches for a stripe in which the number of data items C is one. It is to be noted that the source stripe is searched for by searching the stripes from the one with the highest stripe number to the one with the lowest stripe number. More specifically, the stripe S(n-1), the stripe S(n-2), ... , the stripe S(2), the stripe S(1), and the stripe S(0) are searched in this order.

(S2) The data allocation control unit 21 searches for a stripe having C data items from the data number management table T1.

(S3) The data allocation control unit 21 determines whether S(i)=C, wherein i is the stripe number. If S(i)=C, then the process proceeds to Step S11. If S(i)≠C, then the process proceeds to Step S4. It is to be noted that, if S(i)=C, a source stripe is detected. Therefore, the process proceeds to Step S11 so as to search for a destination stripe.

(S4) The data allocation control unit 21 determines whether the stripe S(i) is the last stripe to be searched.

(S5) The data allocation control unit 21 determines whether i=0. If i=0, then the process proceeds to Step S7. If i≠0, then the process proceeds to Step S6.

If i=0, since the search has reached the top stripe S(0), checking of all the stripes is completed. If i≠0, since not all the stripes are searched, the search is performed toward the top.

(S6) The data allocation control unit 21 searches for the next stripe. Thus, the process goes back to Step S2.

(S7) The data allocation control unit 21 searches for a stripe having the second smallest number of data items. For example, if the data allocation control unit 21 has first searched for a stripe of C=1, then the data allocation control unit 21 searches for a stripe of C=2 (a stripe having two data items). In this way, the number of data items C is gradually incremented.

(S8) The data allocation control unit 21 determines whether the number of data items in the source stripe is excessively large.

(S9) The data allocation control unit 21 determines whether C≥Dn/2. The conditional expression used herein for determining whether the number of data items in the source stripe is excessively large is C≥Dn/2, wherein C is the number of data items and Dn is the number of currently operating hard disks (the number of blocks per stripe).

If there is a stripe in which the number of blocks storing data items is less than half of the number of blocks that are configured to store data items, the data allocation control unit 21 selects the stripe as the source stripe. The data allocation control unit 21 repeats the operation of selecting a source stripe until no more stripes are detected in which the number of blocks storing data items is less than half of the number of blocks that are configured to store data items.

That is, if C<Dn/2 is satisfied, the process goes back to Step S2 so as to perform a stripe search operation again. If C≥Dn/2 is satisfied, the number of data items in the source stripe is equal to or greater than half the number of blocks that are configured to store data items. In this case, the data allocation control unit 21 determines that there is no data item to be moved, so that the source stripe search operation is ended.

(S11) The data allocation control unit 21 searches for a destination stripe to which C data items may be moved, from the data number management table T1. It is to be noted that the destination stripe is searched for by searching the stripes from the one with the lowest stripe number to the one with the highest stripe number. More specifically, the stripe S(0), the stripe S(1), ... , the stripe S(n-2), and the stripe S(n-1) are searched in this order.

(S12) The data allocation control unit 21 determines whether S(j)=Dn-C-X. The conditional expression used herein for determining whether to specify a stripe as a destination stripe is S(j)=Dn-C-X, wherein j is the stripe number of the destination stripe, Dn is the number of currently operating hard disks (the number of blocks per stripe), and X is a correction value. In the first search, no correction is applied (correction value=0).

If S(j)=Dn-C-X, then the process proceeds to Step S13. If S(j)≠Dn-C-X, then the process proceeds to Step S14.

(S13) Since a destination stripe is detected, the data allocation control unit 21 moves the data items in the source stripe to the destination stripe. Then, the process goes back to Step S4. It is to be noted that, after the data movement, the data allocation control unit 21 changes the registered information in the data number management table T1 and the data presence management table T2.

(S14) The data allocation control unit 21 determines whether the stripe S(j) is the last stripe to be searched.

(S15) The data allocation control unit 21 determines whether j=n-1. If j≠n-1, then the process proceeds to Step S16. If j=n-1, then the process proceeds to Step S17.

If j=n-1, since the search has reached the last stripe S(n-1), checking of all the stripes is completed. If j≠n-1, since not all the stripes are searched, the search is performed toward the last stripe S(n-1).

(S16) The data allocation control unit 21 searches for the next stripe. Thus, the process goes back to Step S11.

(S17) Since the search has reached the last stripe S(n-1), the data allocation control unit 21 searches for a destination stripe having more available blocks.

(S18) The data allocation control unit 21 determines whether X≥Dn-C. If X<Dn-C, then the process proceeds to Step S19. If X≥Dn-C, then the process proceeds to Step S20.

The conditional expression used herein for searching for a destination stripe having more available blocks is X≥Dn-C. If X≥Dn-C is satisfied, the expression of Step S12 is not satisfied, and therefore there is no destination stripe. If X<Dn-C is satisfied, the expression of Step S12 is satisfied. That is, since there is a destination stripe capable of storing data items, the operation of searching for a destination stripe is continued.

(S19) The data allocation control unit 21 starts the search from the first stripe. Thus, the process goes back to Step S11.

(S20) The data allocation control unit 21 determines that there is no destination stripe capable of storing data items of the source stripe, so that the destination stripe search operation is ended.

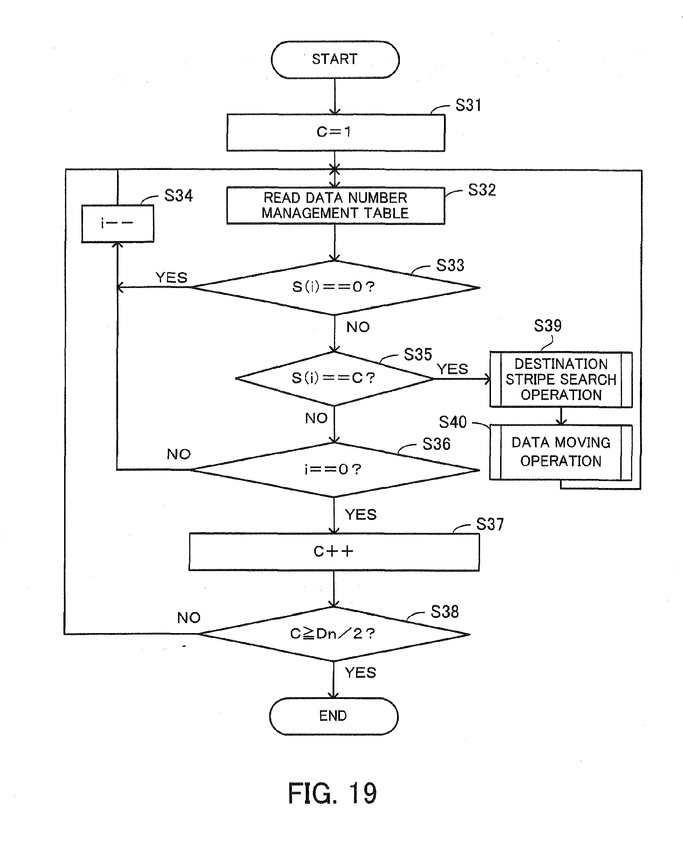

In this way, data are moved such that the stripe-write acceptable area is increased. More specifically, the data allocation control unit 21 repeatedly performs a source stripe search operation, a destination stripe search operation, and a data moving operation, while updating the contents of the data number management table T1 and the data presence management table T2. In the following, a description will be given of a detailed flow of the source stripe search operation including updating of tables. FIG. 19 illustrates a detailed flow of the source stripe search operation.

(S31) The data allocation control unit 21 sets the number of data item C to 1 (C=1).

(S32) The data allocation control unit 21 reads information registered in the data number management table T1.

(S33) The data allocation control unit 21 determines whether S(i)==0, wherein i is the source stripe number. That is, the data allocation control unit 21 determines whether all of the blocks of the stripe S(i) are available. If S(i)==0 is true, then the process proceeds to Step S34. If S(i)==0 is false, then the process proceeds to Step S35. It is to be noted that, the search starts with i=n-1.

(S34) The data allocation control unit 21 decrements i by one. Then, the process goes back to Step S32.

(S35) The data allocation control unit 21 determines whether S(i)==C. If S(i)==C is true, then the process proceeds to Step S39. If S(i)==C is false, then the process proceeds to Step S36.

(S36) The data allocation control unit 21 determines whether i==0. That is, the data allocation control unit 21 determines whether the search has reached the top stripe. If i==0 is true, the data allocation control unit 21 determines that the all the stripe are searched. Then, the process proceeds to Step S37. If i==0 is false, the process goes back to Step S34 so as to perform further search.

(S37) The data allocation control unit 21 increments C by one.

(S38) The data allocation control unit 21 determines whether C≥Dn/2. If C≥Dn/2, the data allocation control unit 21 determines that the number of data items in the source stripe is excessively large, so that the operation is ended. If C<Dn/2, the process goes back to Step S32.

(S39) The data allocation control unit 21 specifies the stripe S(i) that is currently being searched as the source stripe. Then, the process proceeds to a destination stripe search operation.

(S40) When the process returns from the destination stripe search operation, the process moves to an operation of moving data from the source stripe to the destination stripe. When the process returns from the data moving operation, the process goes back to Step S32.

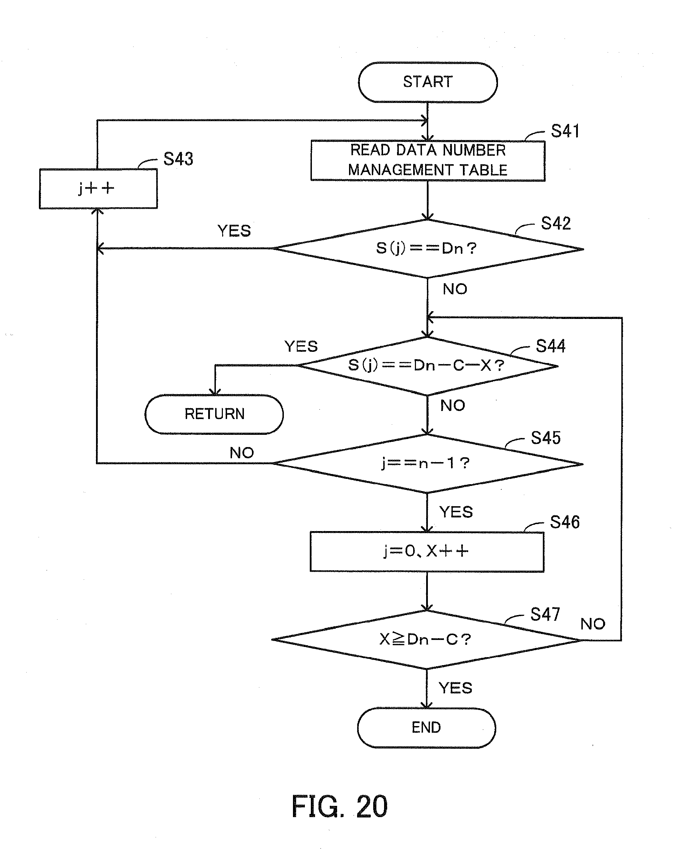

Next, a description will be given of a detailed flow of a destination stripe search operation. FIG. 20 illustrates a detailed flow of the destination stripe search operation.

(S41) The data allocation control unit 21 reads information registered in the data number management table T1.

(S42) The data allocation control unit 21 determines whether S(j)==Dn, wherein j is the destination stripe number. That is, the data allocation control unit 21 determines whether all of the blocks of the stripe S(j) store data items. If S(j)==Dn is true, then the process proceeds to Step S43. If S(j)==Dn is false, then the process proceeds to Step S44. It is to be noted that, the search starts with j=0.

(S43) The data allocation control unit 21 increments j by one. Then, the process goes back to Step S41.

(S44) The data allocation control unit 21 determines whether S(j)==Dn-C-X. If S(j)==Dn-C-X, the data allocation control unit 21 specifies the stripe S(j) that is currently being searched as the destination stripe, and the process returns to the caller. If S(j)≠Dn-C-X, the process proceeds to Step S45.

(S45) The data allocation control unit 21 determines whether j==n-1. If j==n-1 is true, X is corrected. Then, the process proceeds to Step S46 so as to search for a destination stripe having more available blocks. If j==n-1 is false, the process goes back to Step S43 so as to continue the search.

(S46) The data allocation control unit 21 sets j to 0 (j=0), and increments the correction value X by one.

(S47) The data allocation control unit 21 determines whether X≥Dn-C. If X<Dn-C, the process goes back to Step S44. If X≥Dn-C, the data allocation control unit 21 determines that there is not destination stripe, so that the process is ended without returning to the caller.

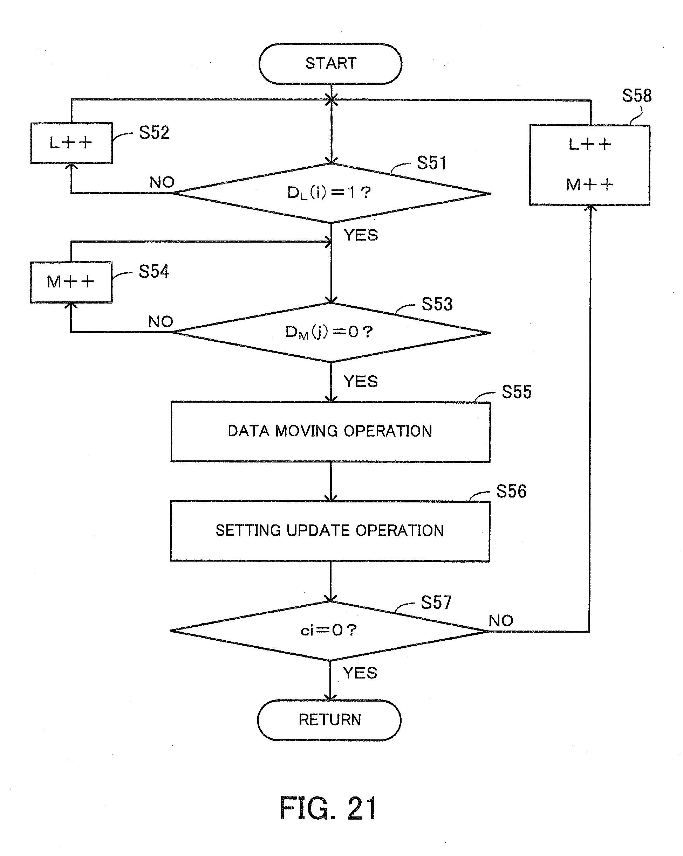

Next, a description will be given of a detailed flow of a data moving operation. FIG. 21 illustrates a detailed flow of the data moving operation.

(S51) The data allocation control unit 21 determines whether D_{L}(i)=1, wherein L is the hard disk number, and i is the source stripe number.

If D_{L}(i)=1, a data item is present in the block of the hard disk number L and the source stripe number i. If D_{L}(i)=0, no data item is present in the block of the hard disk number L and the source stripe number i. If D_{L}(i)=1, then the process proceeds to Step S53. If D_{L}(i)=0, then the process proceeds to Step S52.

(S52) The data allocation control unit 21 increments the hard disk number L by one. Then, the process goes back to Step S51.

(S53) The data allocation control unit 21 determines whether D_{M}(j)=0, wherein M is the hard disk number, and j is the destination stripe number.

If D_{M}(j)=0, the block of the hard disk number M and the source stripe number j is an available block (a destination block of the data item. If D_{M}(j)=1, the block of the hard disk number M and the source stripe number j is not an available block. If D_{M}(j)=0, then the process proceeds to Step S55. If D_{M}(j)=1, then the process proceeds to Step S54.

(S54) The data allocation control unit 21 increments the hard disk number M by one. Then, the process goes back to Step S53.

(S55) The data allocation control unit 21 moves the data item stored in the block of D_{L}(i) to the available block of D_{M}(j).

(S56) The data allocation control unit 21 updates setting values. More specifically, since the data item is moved to the block of the stripe number j on the hard disk M, the data allocation control unit 21 sets D_{M}(j) to 1 (D_{M}(j)=1). On the other hand, since the data item is moved from the block of the stripe number i on the hard disk L, the data allocation control unit 21 sets D_{L}(i) to 0 (D_{L}(i)=0).

It is to be noted that, in this case, the data allocation control unit 21 updates the information on the number of data items for each of these stripes in the data number management table T1. Also, the data allocation control unit 21 updates the information on presence of data for each of these stripes in the data presence management table T2.

Further, the data allocation control unit 21 updates, in a file system, information specifying the position of a block for storing the data item that has been stored in the source stripe such that the specified position is changed from the position of the block of the source stripe to the position of the block of the destination stripe. That is, in the inode, the information specifying the position of a block for storing the data item that has been stored in D_{L}(i) is changed so as to specify the position of the block of D_{M}(j).

(S57) The data allocation control unit 21 determines whether ci=0, wherein ci is the number of data items (C) in the source stripe. If ci=0, the moving of data from the source stripe is completed. Then, the process returns to the caller. If ci≠0, then the process proceeds to Step S58.

(S58) The data allocation control unit 21 increments each of the source hard disk number L and the destination hard disk number M by one. Then, the process goes back to Step S51.

As described above, according to this embodiment, a stripe in which data are stored in only a part of blocks is selected, and the data stored in the selected stripe are moved to another stripe in which data are stored only a part of blocks. Thus, a stripe-write acceptable area is created. Therefore, when storing new data after this operation, the new data may be written by stripe write. As a result, a write penalty is avoided.

Further, according to this embodiment, a stripe in which the number of blocks storing data items is less than half of the number of blocks that are configured to store data items is selected as a source stripe. This reduces the amount of data to be moved and improves the processing efficiency.

Furthermore, according to this embodiment, a stripe having a small number of blocks that store data items is preferentially selected among the stripes storing data items. This further improves the effect of reducing the amount of data to be moved, and further increases the efficiency of the operation.

Further, according to this embodiment, the operation of selecting a source stripe is repeated until no more stripes are detected in which the number of blocks storing data items is less than half of the number of blocks that are configured to store data items. This makes it possible to generate a greater stripe-write acceptable area.

Further, according to this embodiment, a stripe which is to have a small number of available blocks after data movement is preferentially selected as a destination stripe. This makes it possible to generate a greater stripe-write acceptable area.

Further, according to this embodiment, in the file system, the information specifying the position of a block for storing the data item that has been stored in the source stripe is updated such that the specified position is changed from the position of the block of the source stripe to the position of the block of the destination stripe. Accordingly, even if a data item is moved between stripes, it is possible to appropriately access the moved data item.

Further, according to this embodiment, when an unused hard disk is added, a block of the unused hard disk is added to each of the existing stripes. When a block of the unused hard disk is added to each of the existing stripes, an operation of selecting a source stripe is started. Then, data in a stripe selected as a source stripe are moved, so that a stripe-write acceptable area is generated. This prevents concentration of subsequent data writing operations to the added hard disk, and thus improves the data access efficiency.

It is to be noted that, although the storage unit 23 includes a plurality of hard disks in the above embodiment, other storage media such as SSDs may be used in place of the hard disks.

According to one embodiment, it is possible to prevent a write penalty from being incurred.

## Claims

1. An information processing apparatus comprising:
first selecting means (12) for selecting, as a source stripe, a stripe in which at least one of blocks stores a data item and another one of the blocks stores an error-correcting code for the data item, among a plurality of stripes (s1 through sn) each including a group of storage areas of a plurality of blocks that are located one on each of a plurality of storage devices (11-1 through 11-N);
second selecting means (13) for selecting, as a destination stripe, a stripe in which at least one of blocks stores a data item and in which the number of available blocks is equal to or greater than the number of blocks of the source stripe which store data items, among the stripes other than the source stripe; and
moving means (14) for moving the data item stored in the source stripe to the available block of the destination stripe.

2. The information processing apparatus according to claim 1, wherein the first selecting means (12) selects, as the source stripe, a stripe in which the number of blocks storing data items is less than half of the number of blocks that are configured to store data items.

3. The information processing apparatus according to claim 1 or 2, wherein the first selecting means (12) preferentially selects, as the source stripe, a stripe having the smallest number of blocks that store data items, among the stripes storing data items.

4. The information processing apparatus according to any one of claims 1 through 3, wherein the first selecting means (12) repeats selecting a source stripe until no more stripes are detected in which the number of blocks storing data items is less than half of the number of blocks that are configured to store data items.

5. The information processing apparatus according to any one of claims 1 through 4, wherein the second selecting means (13) preferentially selects, as the destination stripe, a stripe which is to have the smallest number of available blocks after data movement, among the stripes other than the source stripe.

6. The information processing apparatus according to any one of claims 1 through 5, further comprising:
updating means for updating, in a file system, information specifying a position of a block for storing the data item that has been stored in the source stripe such that the specified position is changed from a position of the block of the source stripe to a position of the block of the destination stripe to which the data item is moved.

7. The information processing apparatus according to any one of claims 1 through 6, further comprising:
adding means for adding, when an unused storage device is added, a block of the unused storage device to each of the existing stripes;
wherein the first selecting means starts an operation of selecting a source stripe when a block is added to each of the existing stripes.

8. A computer program which causes a computer to perform a procedure comprising:
selecting, as a source stripe, a stripe in which at least one of blocks stores a data item, among a plurality of stripes (s1 through sn) each including a group of storage areas of a plurality of blocks that are located one on each of a plurality of storage devices (11-1 through 11-N), the blocks of the stripes (s1 through sn) being configured to store data items and error-correcting codes for the data items;
selecting, as a destination stripe, a stripe in which at least one of blocks stores a data item and in which the number of available blocks is equal to or greater than the number of blocks of the source stripe which store data items, among the stripes other than the source stripe; and
moving the data item stored in the source stripe to the available block of the destination stripe.

9. A data allocation method executed by a computer, the method comprising:
selecting, as a source stripe, a stripe in which at least one of blocks stores a data item and another one of the blocks stores an error-correcting code for the data item, among a plurality of stripes (s1 through sn) each including a group of storage areas of a plurality of blocks that are located one on each of a plurality of storage devices (11-1 through 11-N);
selecting, as a destination stripe, a stripe in which at least one of blocks stores a data item and in which the number of available blocks is equal to or greater than the number of blocks of the source stripe which store data items, among the stripes other than the source stripe; and
moving and allocating the data item stored in the source stripe to the available block of the destination stripe.
